# EUROPEAN PATENT SPECIFICATION

(11) **EP 2 218 280 B1**
(45) Date of publication and mention of the grant of the patent: **15.08.2012**
(21) Application number: 09778741.0
(22) Date of filing: 28.09.2009
(51) Int. Cl.: H04W 36/00, H04W 36/08

(54) **METHOD FOR AUTOMATIC CONFIGURATION OF PROXIMITY RELATIONSHIPS IN LAND MOBILE NETWORKS**
VERFAHREN ZUR AUTOMATISCHEN KONFIGURATION VON NÄHERUNGSVERHÄLTNISSEN IN LANDMOBILNETZWERKEN
PROCÉDÉ DE CONFIGURATION AUTOMATIQUE DE RELATIONS DE PROXIMITÉ DANS DES RÉSEAUX MOBILES TERRESTRES

(30) Priority: 20.11.2008 DE 102008058346
(43) Date of publication of application: 18.08.2010
(73) Proprietor: Deutsche Telekom AG, 53113 Bonn (DE)
(72) Inventor: NEUBACHER, Andreas, 2100 Kroneuburg (AT)
(74) Representative: Cohausz Hannig Borkowski Wißgott
(86) International application number: PCT/EP2009/006961
(87) International publication number: WO 2010/057550

(56) References cited:
- US-A1- 2008 002 628
- VODAFONE ET AL: "SON use-case: Automatic Neighbour Cell List Configuration" 3GPP DRAFT; R3-071957, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Sophia Antipolis, France; 20071004, 4 October 2007 (2007-10-04), XP050162741 [retrieved on 2007-10-04]
- T-MOBILE ET AL: "SON use-case: Neighbour Relationship optimisation" 3GPP DRAFT; R3-071601, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Athens, Greece; 20070827, 27 August 2007 (2007-08-27), XP050162413 [retrieved on 2007-08-27]
- T-MOBILE: "Automatic Neighbour Cell List Configuration status and solutions" 3GPP DRAFT; R3-071935, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Sophia Antipolis, France; 20071003, 3 October 2007 (2007-10-03), XP050162722 [retrieved on 2007-10-03]

## Description

The invention relates to a method for configuration of proximity relationships of cells of a cellular land mobile network which is formed by a plurality of cells which each have an identification, between adjacent cells proximity relationships being formed in order to be able to hand over checked-in cellular terminals and existing connections between cellular terminals and a first cell from the first cell to an adjacent second cell, wherein termination of a connection between a checked-in cellular terminal and the first cell is detected, and detection of that cell taking place in which after the termination of a connection the next connection set-up of the cellular terminal takes place within a second cell of the land mobile network, and that a statistical evaluation of a definable minimum number of detected connection terminations and connection set-ups is done and when a definable proportional boundary value is exceeded for connection terminations in the first cell and new connection set-ups in a certain second cell relative to the total number of acquired data of connection terminations and connection set-ups, a new proximity relationship is set up between the first cell and this second cell.

A method according to these features is disclosed in the publication VODAFONE et al "SON use-case: Automatic Neighbour Cell List Configuration" 3GPP Draft; R3-071957, 3rd Generation Partnership Project (3GPP), Mobile Competence Center, 650, Route des Lucioles, F-06921 Sophia-Antipolis Cedex, France, vol. RAN WG3, no.Sophia Antipolis, France, 20071004, 4 October 2007, XP050162741.

Cellular devices in the course of operation gauge the wireless proximity for possible hand over candidates either continuously (for example in 2G / GSM) or when certain threshold values (for example 3G / UMTS) are reached. The so-called hand over candidates are those neighboring cells which can take over an existing connection to a cellular terminal in passage into the respective cell, i.e. that the connection can be handed over to these cells.

The measured field intensity values are transmitted to the network. The corresponding network elements (for example RNC in 3G or BSC in 2G) thereupon based on these measured values decide whether a hand over to this neighboring cell is initiated.

So that the cellular devices can gauge the corresponding neighboring cells in a dedicated manner, proximity relationships are configured in the network.

Based on these proximity relationships the corresponding information about the neighboring cell to be gauged is made available to the terminal. In 2G (GSM) for example the frequencies of the neighboring cells to be gauged are disclosed. Thus the effort and time for gauging the neighboring cells for the terminal are dramatically reduced since only a more limited number of frequencies/wireless channels (for example a maximum 6 in the case of GSM) compared to the entire GSM spectrum (for example GSM 900/1800 = 124 + 374 wireless channels) need be measured.

The disadvantage is that with the increasing size of the network (number of cells) the number of proximity relationships to be configured increases greatly. In particular, when using hierarchical cell structures (femtocells, microcells, macrocells, and shielding cells), multiband networks GSM 900/1800 or the operation of several technologies in parallel (2G, 3G, LTE, etc.) the effort for planning and configuration of proximity relationships for the cellular operator increases dramatically again.

The object of the invention is to overcome these disadvantages and to devise a method for configuration ofproximity relationships within a cellular land mobile network of the initially mentioned type, which reduces the effort for configuration of proximity relationships between the cells of a cellular land mobile network and allows automation of the configuration of these proximity relationships.

This object is achieved as claimed in the invention by a method as claimed in claim 1. Advantageous developments of the invention are given in the dependent claims.

In the method for configuration of the proximity relationships of cells of a cellular land mobile network which is formed by a plurality of cells which each have an identification, between adjacent cells proximity relationships being formed in order to be able to hand over checked-in cellular terminals and existing connections between cellular terminals and a first cell from the first cell to an adjacent second cell, it is especially advantageous that termination of a connection between a checked-in cellular terminal and the first cell is detected, and detection of that cell taking place in which after the termination of a connection the next connection set-up of the cellular terminal takes place within a second cell of the land mobile network, that a statistical evaluation of a definable minimum number of detected connection terminations and connection set-ups is done and when a definable proportional boundary value is exceeded for connection terminations in the first cell and new connection set-ups in a certain second cell relative to the total number of acquired data of connection terminations and connection set-ups, a new proximity relationship is set up between the first cell and this second cell, and that after a connection termination to a cellular terminal in the first cell the identification of the cellular terminal and the identification of the first cell are transmitted from the first cell to a central acquisition and evaluation unit in the land mobile network, and after a new connection set-up to the cellular terminal in the second cell the identification of the cellular terminal and the home identification are transmitted from the second cell to the central acquisition and evaluation unit.

A connection between a cellular terminal and a cell is defined as both an actually existing cellular connection, for example during a telephone call, and also the operating readiness by checking the cellular terminal into the land mobile network, i.e. especially also the readiness mode of the cellular terminal in the checked-in state. Here the term cell at the same time means a base station in the cell.

Correct acquisition of the required data can be easily done since a cellular terminal can be uniquely identified and uniquely addressed in the land mobile network by way of its terminal number or serial number (international mobile equipment identity, abbreviated IMEI) and/or the mobile subscriber number (mobile subscriber ISDN number, abbreviated MSISDN).

Especially within the first cell are the identifications of the configured neighboring cells transmitted to the checked-in cellular terminals and by means of a cellular terminal which has been checked-in in the first cell the field intensity of the disclosed neighboring cells is measured continuously or when a threshold value is reached, the measured field intensities of the neighboring cells being transmitted to the first cell, hand over to the neighboring cell with the highest field intensity taking place after evaluation of the measured field intensities of the neighboring cells when a threshold value is exceeded.

This improves the possibility of handing over checked-in cellular terminals and existing connections from a first cell to neighboring cells when the boundary to an already configured neighboring cell is crossed.

Preferably the acquired data of connection terminations and connection set-ups are transmitted to a central unit integrated into the land mobile network.

Preferably the land mobile network integrates a central unit by means of which statistical evaluation of the data and configuration of new proximity relationships between the first cell and the second cell take place.

Because there is a central unit, central evaluation of the data, set-up and monitoring of existing and new proximity relationships can take place, by which control and configuration of the entire land mobile network are simplified for the network operator.

Preferably after a connection termination in the first cell and a new connection set-up in the second cell the identification of the first cell in which the connection has been interrupted is transmitted from the cellular terminal to the base station of the second cell.

In alternation or cumulatively after a connection termination to a cellular terminal in the first cell the identification of the cellular terminal and the home identification are transmitted from the first cell to the central acquisition and evaluation unit in the land mobile network, and after a new connection set-up to the cellular terminal in the second cell the identification of the cellular terminal and the home identification are transmitted from the second cell to the central acquisition and evaluation unit.

In the absence of proximity relationships a possible neighboring cell (so-called hand over candidate), i.e. a neighboring cell for potential hand over of an existing connection, is not gauged by the cellular terminal and thus is not recognized as a hand over candidate by the network (RNC, BSC). The consequence is connection terminations between two cells.

Exactly these connection terminations are used as claimed in the invention to detect a missing proximity relationship and to establish the corresponding measures so that this proximity relationship is configured in the network.

One method for automatic configuration of proximity relationships in the network consists in that the cellular terminal discloses the cell which supplied the cellular device before termination to the network in a further connection set-up directly after connection termination.

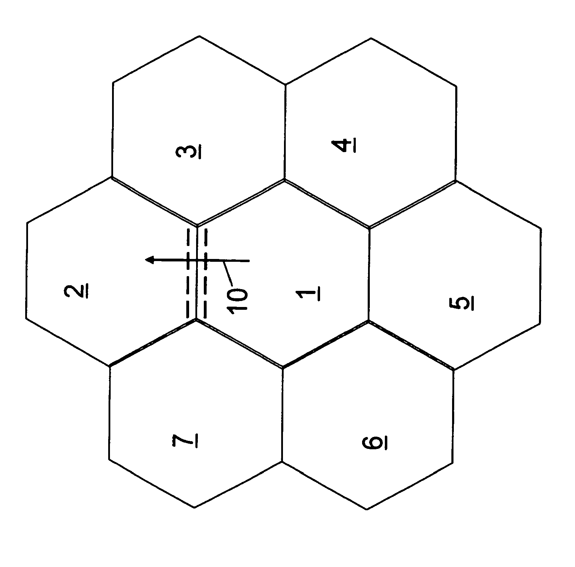

One embodiment of the method as claimed in the invention is shown schematically in the figure and is explained below.

The figure shows an extract of a cellular land mobile network with the cells I to 7. The cells 2 to 7 are neighboring cells of the cell 1. For cells 3 to 7 proximity relationships relative to cell I are configured. Between the first cell 1 and the second cell 2 however a proximity relationship is not configured, as is indicated by the broken lines on the boundary of the cells 1 and 2.

For the other neighboring cells 3 to 7 of the first cell 1 however the corresponding proximity relationships of the first cell 1 are configured so that cells 3 to 7 are considered as hand over candidates when approaching the boundaries of cell 1. The base station system technology (BTS, NodeB, eNodeB, etc.) of the cell in which the cellular device again re-establishes the connection can relay the following information:
Connection set-up (for example, in cell 2) after connection termination (for example in cell 1) to a central unit, for example the OMC (operation and maintenance center).

When the cellular terminal is moving within the first cell 1 in the direction to the second cell 2 along the arrow 10 and the boundary between the cells 1 and 2 is reached or passed, there is no hand over of the connection from the first cell 1 to the second cell 2, since a proximity relationship has not so far been configured between these cells I and 2, as is indicated by the broken lines along the boundary between the cells 1 and 2.

The accumulated occurrence of an error picture of connection termination in the cell 1 and further connection set-up in cell 2 allows the conclusion that a proximity relationship has not been configured in the network between the cells 1 and 2.

Another possibility consists in that the corresponding base station system technology (BTS, NodeB, eNodeB, etc) sends the corresponding information, provided with a time or other suitable reference, to a central unit (for example, the OMC) which then correlates the respective individual events.

For example, the cellular device loses its connection in the cell 1. This event can be recognized by the respective base station system technology based on the loss of the signalling connection to the respective cellular device. The base station system technology sends to this central unit information about the loss of the connection to this cellular device, for example: connection to the cellular device X in cell 1 terminated.

If the following connection set-up of the cellular device X is registered for example by the base station system technology in a cell 2 and this event is relayed likewise to the central unit, this central unit is in turn able from a relatively large number of these individual events such as "connection to the cellular device X in cell 1 terminated. Cellular device X has set up the connection in the cell 2."

The relatively high occurrence of these two individual events indicates a lacking proximity relationship between the cells 1 and 2.

When a boundary value in the statistical frequency is exceeded, then the configuration of the proximity relationship between cells 1 and 2 can take place automatically.

## Claims

1. Method for configuration of proximity relationships of cells (1, 2, 3, 4, 5, 6, 7) of a cellular land mobile network which is formed by a plurality of cells (1, 2, 3, 4, 5, 6, 7) which each have an identification, between adjacent cells proximity relationships being formed in order to be able to hand over checked-in cellular terminals and existing connections between cellular terminals and a first cell (1) from the first cell (1) to an adjacent second cell (3, 4, 5, 6, 7), wherein termination of a connection between a checked-in cellular terminal and the first cell (1) is detected, and detection of that second cell (2) of the land mobile network taking place in which after the termination of the connection the next connection set-up of the cellular terminal takes place, that a statistical evaluation of a definable minimum number of detected connection terminations and connection set-ups is done and when a definable proportional boundary value is exceeded for connection terminations in the first cell (1) and new connection set-ups in a certain second cell (2) relative to the total number of acquired data of connection terminations and connection set-ups, a new proximity relationship is set up between the first cell (1) and this second cell (2), **characterized in that** after a connection termination to a cellular terminal in the first cell (1) the identification of the cellular terminal and the identification of the first cell (1) are transmitted from the first cell (1) to a central acquisition and evaluation unit integrated in the land mobile network, and after a new connection set-up to the cellular terminal in the second cell (2) the identification of the cellular terminal and the identification of the second cell (2) are transmitted from the second cell (2) to the central acquisition and evaluation unit, wherein the central acquisition and evaluation unit performs the statistical evaluation of the data and the configuration of a new proximity relationship between the first cell (1) and the second cell (2).

2. Method as claimed in claim 1, **characterized in that** within the first cell (1) the identifications of the configured neighboring cells (3, 4, 5, 6, 7) are transmitted to the checked-in cellular terminals and by means of a cellular terminal which has been checked-in in the first cell (1) the field intensity of the disclosed neighboring cells (3, 4, 5, 6, 7) being measured continuously or when a threshold value is reached, the measured field intensities of the neighboring cells (3, 4, 5, 6, 7) being transmitted to the first cell (1), after evaluation of the measured field intensities of the neighboring cells (3, 4, 5, 6, 7) when a threshold value is exceeded, hand over to the neighboring cell with the highest field intensity taking place.

3. Method as claimed in claim 1 or 2, **characterized in that** after a connection termination in the first cell (1) and a new connection set-up in the second cell (2) the identification of the first cell (1) in which the connection has been interrupted is transmitted from the cellular terminal to the base station of the second cell (2).

## Patentansprüche

1. Verfahren zur Konfiguration von Proximitätsbeziehungen von Zellen (1, 2, 3, 4, 5, 6, 7) eines zellularen Landmobilnetzes, das durch mehrere Zellen (1, 2, 3, 4, 5, 6, 7) gebildet wird, die jeweils eine Identifikation aufweisen, wobei zwischen angrenzenden Zellen Proximitätsbeziehungen gebildet werden, um in der Lage zu sein, eingecheckte zellulare Endgeräte und existierende Verbindungen zwischen zellularen Endgeräten und einer ersten Zelle (1) von der ersten Zelle (1) an eine angrenzende zweite Zelle (3, 4, 5, 6, 7) weiterzureichen, wobei der Abschluss einer Verbindung zwischen einem eingecheckten zellularen Endgerät und der ersten Zelle (1) detektiert wird und die Detektion dieser zweiten Zelle (2) des Landmobilnetzes stattfindet, wobei nach dem Abschluss der Verbindung der nächste Verbindungsaufbau des zellularen Endgeräts stattfindet, eine statistische Evaluierung einer definierbaren Mindestzahl detektierter Verbindungsabschlüsse und Verbindungsaufbauvorgänge erfolgt, und wenn ein definierbarer proportionaler Randwert für Verbindungsabschlüsse in der ersten Zelle (1) und die neuen Verbindungsaufbauvorgänge in einer bestimmten zweiten Zelle (2) relativ zu der Gesamtzahl beschaffter Daten von Verbindungsabschlüssen und Verbindungsaufbauvorgängen überschritten wird, eine neue Proximitätsbeziehung zwischen der ersten Zelle (1) und dieser zweiten Zelle (2) aufgebaut wird, **dadurch gekennzeichnet, dass** nach einem Verbindungsabschluss zu einem zellularen Endgerät in der ersten Zelle (1) die Identifikation des zellularen Endgeräts und die Identifikation der ersten Zelle (1) von der ersten Zelle (1) zu einer in das Landmobilnetz integrierten zentralen Akquisitions- und Evaluierungseinheit gesendet werden und nach einem neuen Verbindungsaufbau zu dem zellularen Endgerät in der zweiten Zelle (2) die Identifikation des zellularen Endgeräts und die Identifikation der zweiten Zelle (2) von der zweiten Zelle (2) zu der zentralen Akquisitions- und Evaluierungseinheit gesendet werden, wobei die zentrale Akquisitions- und Evaluierungseinheit die statistische Evaluierung der Daten und die Konfiguration einer neuen Proximitätsbeziehung zwischen der ersten Zelle (1) und der zweiten Zelle (2) durchführt.

2. Verfahren nach Anspruch 1, **dadurch gekennzeichnet, dass** in der ersten Zelle (1) die Identifikationen der konfigurierten Nachbarzellen (3, 4, 5, 6, 7) zu den eingecheckten zellularen Endgeräten gesendet werden und mittels eines zellularen Endgeräts, das in der ersten Zelle (1) eingecheckt wurde, die Feldintensität der offenbarten Nachbarzellen (3, 4, 5, 6, 7) kontinuierlich, oder wenn ein Schwellenwert erreicht wird, gemessen wird, wobei die gemessenen Feldintensitäten der Nachbarzellen (3, 4, 5, 6, 7) zu der ersten Zelle (1) gesendet werden und nach Evaluierung der gemessenen Feldintensitäten der Nachbarzellen (3, 4, 5, 6, 7), wenn ein Schwellenwert überschritten wird, die Weiterreichung zu der Nachbarzelle mit der höchsten Feldintensität stattfindet.

3. Verfahren nach Anspruch 1 oder 2, **dadurch gekennzeichnet, dass** nach einem Verbindungsabschluss in der ersten Zelle (1) und einem neuen Verbindungsaufbau in der zweiten Zelle (2) die Identifikation der ersten Zelle (1), in der die Verbindung unterbrochen wurde, von dem zellularen Endgerät zu der Basisstation der zweiten Zelle (2) gesendet wird.

## Revendications

1. Procédé de configuration de relations de proximité de cellules (1, 2, 3, 4, 5, 6, 7) d'un réseau mobile cellulaire terrestre qui est formé d'une pluralité de cellules (1, 2, 3, 4, 5, 6, 7) ayant chacune une identification, des relations de proximité entre cellules adjacentes étant formées de manière à être capable de transférer des téléphones mobiles enregistrés et des connexions existantes entre des téléphones mobiles et une première cellule (1), de la première cellule (1) à une seconde cellule adjacente (3, 4, 5, 6, 7), où l'arrêt d'une connexion entre un téléphone mobile enregistré et la première cellule (1) est détecté, et la détection de cette seconde cellule (2) du réseau mobile terrestre s'effectuant selon laquelle, après l'arrêt de la connexion, l'établissement de connexion suivant du téléphone mobile s'effectue, une évaluation statistique d'un nombre minimum définissable d'arrêts de connexion détectés et d'établissements de connexion est effectuée, et lorsqu'une valeur limite proportionnelle définissable est dépassée pour des arrêts de connexion dans la première cellule (1) et de nouveaux établissements de connexion dans une certaine seconde cellule (2) par rapport au nombre total de données acquises d'arrêts de connexion et d'établissements de connexion, une nouvelle relation de proximité est définie entre la première cellule (1) et cette seconde cellule (2), **caractérisé en ce que**, après un arrêt de connexion vers un téléphone mobile dans la première cellule (1), l'identification du téléphone mobile et l'identification de la première cellule (1) sont transmises de la première cellule (1) à une unité centrale d'acquisition et d'évaluation intégrée dans le réseau mobile terrestre, et après un nouvel établissement de connexion vers le téléphone mobile dans la seconde cellule (2), l'identification du téléphone mobile et l'identification de la seconde cellule (2) sont transmises de la seconde cellule (2) à l'unité centrale d'acquisition et d'évaluation, où l'unité centrale d'acquisition et d'évaluation effectue l'évaluation statistique des données et la configuration d'une nouvelle relation de proximité entre la première cellule (1) et la seconde cellule (2).

2. Procédé tel que revendiqué dans la revendication 1, **caractérisé en ce que**, dans la première cellule (1), les identifications des cellules avoisinantes configurées (3, 4, 5, 6, 7) sont transmises aux téléphones mobiles enregistrés et au moyen d'un téléphone mobile qui a été enregistré dans la première cellule (1), la densité de puissance des cellules avoisinantes découvertes (3, 4, 5, 6, 7) étant mesurée en continu ou lorsqu'une valeur seuil est atteinte, les densités de puissance mesurées des cellules avoisinantes (3, 4, 5, 6, 7) étant transmises à la première cellule (1), après évaluation des densités de puissance mesurées des cellules avoisinantes (3, 4, 5, 6, 7) lorsqu'une valeur seuil est dépassée, un transfert vers la cellule avoisinante ayant la densité de puissance la plus élevée est effectué.

3. Procédé tel que revendiqué dans la revendication 1 ou la revendication 2, **caractérisé en ce qu'**après un arrêt de connexion dans la première cellule et l'établissement d'une nouvelle connexion dans la seconde cellule (2), l'identification de la première cellule (1), dans laquelle la connexion a été interrompue, est transmise du téléphone mobile à la station de base de la seconde cellule (2).
